# EUROPEAN PATENT SPECIFICATION

(11) **EP 2 257 076 B1**
(45) Date of publication and mention of the grant of the patent: **25.02.2015**
(21) Application number: 09161406.5
(22) Date of filing: 28.05.2009
(51) Int. Cl.: H04N 13/04

(54) **Video data signal, system and method for controlling shutter glasses**
Videodatensignal, System und Verfahren zum Steuern der Blendengläser
Signal de données vidéo, systême et procédé pour contrôler les verres obturateurs

(43) Date of publication of application: 01.12.2010
(73) Proprietor: Advanced Digital Broadcast S.A., 1292 Chambesy (CH)
(72) Inventor: Paczkowski, Jacek, 40-111 Katowice (PL)
(74) Representative: Blonski, Pawel

(56) References cited:
- EP-A2- 0 233 636
- EP-A2- 2 056 155
- JP-A- 63 214 095
- JP-A- 2001 154 640

## Description

Technical concept presented herein relates generally to a video data signal, system and method for controlling shutter glasses commonly used in viewing stereoscopic images. The whole concept is utilised in systems having means for alternately making right and left type shutter of the shutter glasses transparent. Typically the shutters are liquid-crystal-display (LCD) type shutters. However other types of shutters may be applied.

A viewer, wearing the LCD shutter glasses controlled by said controlling system, will experience a three-dimensional effect if the alternately transparent speed of the right and left LCD-type shutter is properly synchronized with the display. This is an essential feature of such systems.

A prior art disclosed in a publication of U.S. Pat. No. 5,796,373, entitled "COMPUTERIZED STEREOSCOPIC IMAGE SYSTEM AND METHOD OF USING TWO-DIMENSIONAL IMAGE FOR PROVIDING A VIEW HAVING VISUAL DEPTH", utilizes one pair of LCD shutter glasses and the binocular disparity method to produce a three-dimensional effect. In that prior art, the alternately transparent rate of the right and left LCD-type shutters is synchronal with the alternate emerging rate of the right and left images shown in the computer screen. That is, when the left image for the left eye is shown on the screen, the left LCD-type shutter is transparent and the right one is opaque. On the other hand, when the right image for the right eye is shown on the screen, the right LCD-type shutter is transparent and the left one is opaque. If the alternate emerging rate of the left and right images is less than the delay time of the vision, a truly three-dimensional picture will be created.

The solution of U.S. Pat. No. 5,796,373 is based on an external shutter synchronizer connected with a computer, and receiving an electrical signal out of a VGA graphics card. Therefore the enabling signal for the LCD-type shutters is driven by the signal output by the computer and not by the display. This is disadvantageous since the display may introduce additional delays that may desynchronize the LCD shutters.

An EP Patent application publication number EP 2 056 155 entitled "Method and apparatus for three-dimensional (3D) viewing" discloses a method and apparatus for three-dimensional image viewing of an image display that employs a pair of viewing glasses having left and right side lenses for alternate left-eye and right-eye image viewing by alternately blocking and passing left and right-eye image views from the image display. An image monitor is used to detect lens sync control information interleaved or embedded with image frames of the image display. The lens sync control information detected by the image monitor is decoded into left and right lens control signals for alternately blocking and passing of left and right-eye image views by the left and right side lenses, respectively, in order to generate three-dimensional image viewing.

Another prior art disclosed in a publication of U.S. Pat. No. 6,678,091, entitled: "SYSTEM AND METHOD TO SYNCHRONIZE ONE OR MORE SHUTTERS WITH A SEQUENCE OF IMAGES", utilizes shutters synchronizing system in three-dimensional viewing system and synchronizes operation of head gear synchronization circuit with images sequences shown on display by detecting display synchronization image. The patent further discloses that the synchronization means may include a light-sensitive element for detecting the at least one synchronization image displayed on the display. The shutter system may be a head-mounted shutter system.

The U.S. Pat. No. 6,678,091 firstly does not define how the synchronization image shall look and secondly assumes that each frame, displayed after the synchronization period, will be displayed in full for the same amount of time. This would require a special kind of display since in typical display screens frames are not refreshed in exactly the same time for each and every frame. Moreover, the solution, of the U.S. Pat. No. 6,678,091 patent, does not take refresh rate into consideration, hence will not work with displays other than specially adapted ones for this particular solution.

Hence the third drawback is display device dependency. This is a major concern and a reason why 3D television is not yet widely adopted.

Recently there have been introduced display screens specially adapted for LCD shutters. This technology however requires displays capable of refresh rates of 120 Hz or more. Therefore, this solution is very expensive and platform-dependent.

Hence, there exists a problem of controlling shutter glasses in such a manner that it would be virtually display-independent and that could be employed on a live broadcast television content, for example a high-definition television signal 720p at 60Hz.

It is therefore an object of the present invention to provide a video data signal, a system and a method to synchronize one or more shutters on user-worn headgear with a sequence of images shown on a display so that the synchronization is made with the images actually displayed, not meant to be displayed, and the synchronization system and method do not require modifications of existing displays hardware.

An object of the present invention is a video data signal comprising a video content comprising stereoscopic images and at least two markers embedded in each frame of the video content wherein wherein the markers are such that in each left-eye frame the at least two markers have a first graphical property and in each right-eye frame the at least two markers have a second graphical property, the first graphical property and the second graphical property being different such that the at least two markers enable distinguishing between the right-eye and the left-eye frame, wherein one of the at least two markers is positioned in lines of each frame refreshed first and positioned in the first 10% of each frame, along a refresh axis of a display screen on which frames will be displayed, and the second, of the at least two markers, is positioned in the lines of each frame refreshed last and positioned in the last 10% of each frame, along the refresh axis of a display screen on which frames will be displayed, and wherein when it is detected by one or more photo sensing elements that a display displays the at least two markers having the same graphical property a signal is to be generated that will result in opening of one of shutters of the shutter glasses, depending on the detection of either said first graphical property or said second graphical property, while keeping closed the other shutter of the shutter glasses cooperating with the display, and when it is detected by one or more photo sensing elements that a display displays the first marker, having a different graphical property than the second marker, a signal is to be generated that will result in closing both shutters of the shutter glasses cooperating with the display.

Preferably, said first graphical property and said second graphical property are both selected from the group comprising shape, size, brightness and colour.

Another object of the present invention is a computer-implemented method for controlling shutter glasses comprising steps of receiving a stereoscopic video data signal, displaying the stereoscopic video data signal on a display screen, reading at least two markers, embedded in each frame of the stereoscopic video data signal, by one or more photosensors when the markers are displayed and generating, based on the signal read from the one or more photosensors, an enabling signal for the shutter glasses wherein the stereoscopic video data signal is a signal according to the present invention and that the method further comprises the steps of controlling the shutter glasses based on the enabling signal such that when it is detected, by the one or more photosensors, that the display screen displays the first marker, having a different graphical property than the second marker, there is effected closing of both shutters of the shutter glasses cooperating with the display and when both first and second markers have been detected the first marker, having the same graphical property as the second marker, one of the shutters of the shutter glasses is opened, based on the markers, while keeping the other shutter closed.

Preferably, the markers are added on an on-screen display layer of the video content.

Preferably, during a frame refreshing time the shutter glasses remain closed.

Preferably, the frame refreshing time is a time when a left-eye frame first marker and a right-eye second marker are displayed or when a right-eye frame first marker and a left-eye ending second are displayed.

Preferably, the photosensors comprise one or more photo sensing elements.

Another object of the present invention is a computer program comprising program code means for performing all the steps of the method according to the present invention when said program is run on a computer.

Another object of the present invention is a computer readable medium having computer-executable instructions performing all the steps of the computer-implemented method according to the invention.

Another object of the present invention is a system for controlling shutter glasses, the system comprising: a display screen; shutter glasses; and a shutter glasses controller for controlling the shutter glasses; a source of stereoscopic video data signal coupled to the display screen; and one or more photosensors configured to detect at least two markers, embedded in each frame of the stereoscopic video data signal, when a frame of the video data signal is displayed on the screen; wherein the stereoscopic video data signal is a signal according to the present invention and the shutter glasses controller is configured to generate, based on the signal read from the one or more photosensors, an enabling signal for the shutter glasses and further configured to control the shutter glasses based on the enabling signal, wherein the opening of the corresponding shutter, while keeping the other shutter closed, is effected, based on the markers, at a time when both first and second markers have been detected, by the one or more photosensors, the first marker, having the same graphical property as the second marker; and wherein the closing of both shutters is effected at a time when it is detected, by the one or more photosensors, that the first marker has a different graphical property than the second marker.

These and other objects of the invention presented herein are accomplished in accordance with the principles of the presented technical concept by providing an improved video data signal, system and method for controlling shutter glasses. Further details and features of both the system and the method, its nature and various advantages will become more apparent from the accompanying drawing, and the following detailed description of the preferred embodiments shown in a drawing, in which:
Figs. 1A and FIG.1B present a display screen with two sensors mounted on it;
Fig. 2 presents a display screen with four sensors mounted on it;
Fig. 3 shows a procedure for controlling shutter glasses;
Fig. 4 depicts a waveform of LCD shutters enabling signal;
Fig. 5 presents a first embodiment of a system for controlling shutter glasses; and
Fig. 6 presents a second embodiment of a system for controlling shutter glasses.

The present system and method for controlling shutter glasses have been developed in order to allow for experiencing and enjoying three dimensional video content on a standard television set or a standard display.

State-of-the-art video signal displays, due to their hardware specification and operating conditions include, a growing number of quality enhancement features. These quality enhancement features generate a varying delay, hence what is displayed on a screen in not what is presently the content of the received video signal.

Due to this fact it is not possible to output a signal enabling LCD shutters directly from a device which drives a display screen.

The delay, caused by the quality enhancement features, may be different in various displays models and surprisingly may even differ between two television sets of the same maker and kind.

Moreover, these delays may also depend on content of the video signal, for example colors used in a given video frame.

In order to address these drawbacks, markers have been introduced, which control shutter glasses or LCD shutters.

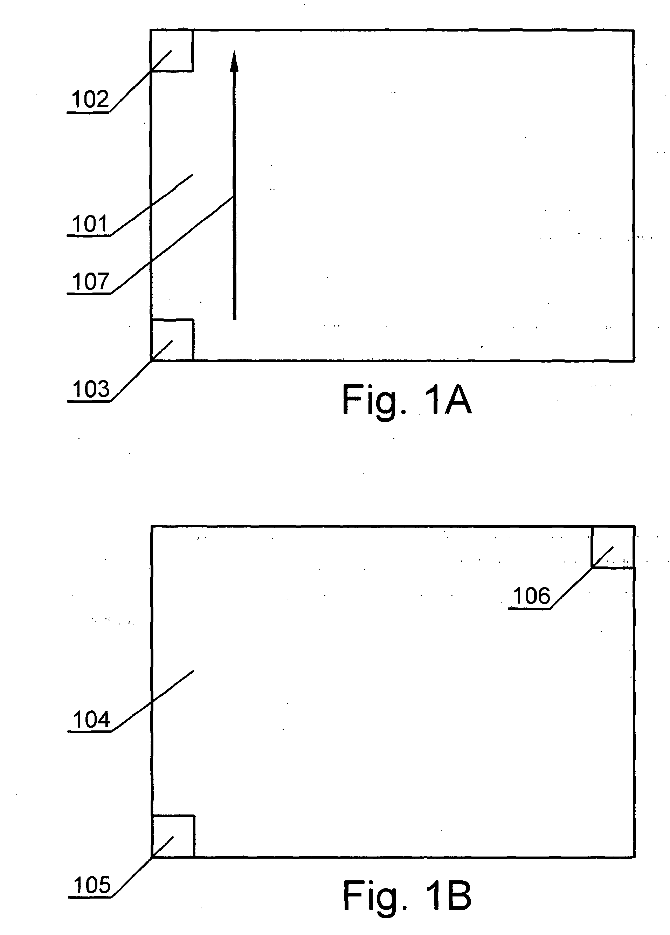

Fig. 1A presents a display screen 101 with two sensors mounted on it. The sensors 102 and 103 are mounted in the top-left and bottom-left corner of the screen. It is to be noted that it is not essential that the sensors are placed in the corners. It is beneficial for the sensors to obscure as little of the screen space as possible.

What is important is that the sensors are to be placed in different halves of the frame, as seen along an axis 107 of frame refreshing. A sensor may cover sections of several lines or a section of a single line depending on the quality and precision of the sensor. The sensor comprises one or more photo sensing elements.

In another embodiment a camera may replace the sensors of the previous embodiment. The camera is of course a type of sensor comprising many photo sensing elements.

The halves, the sensors are placed in, are defined by a splitting line that is perpendicular to the axis 107 of frame refreshing.

The sensor shall be able to read a state of a marker that will be displayed in the region of the screen at which the sensor is placed. Therefore one of the at least two markers is to be displayed in the first half of the frame and a second of the at least two markers is to be displayed in the second half of a frame. They can be named as a frame starting marker and a frame ending marker. The sensors shall be matched with the frame starting and frame ending markers.

Placement of markers and sensors anywhere in the respective halves of the frame may call for stricter timing conditions; therefore other embodiments are also favourable.

In another embodiment one of the at least two markers is to be displayed in one or more of the first lines of a frame and a second of the at least two markers is to be displayed in one or more of the last lines of a frame, as seen along an axis 107 of frame refreshing.

It is preferred that the first lines of a frame are positioned within the first 10% of a given frame whereas the last lines of a frame are positioned within the last 10% of a given frame, wherein the axis 107 of frame refreshing defines which of these lines are first and last respectively. The lines refreshed first are the first lines while the lines refreshed last are the last lines.

It may be several lines or a single line depending on the quality and precision of the sensor. By means of this, precision is gained.

The first lines are the lines that will be first refreshed when a new frame is being displayed while the last lines are the lines that will be last refreshed when a new frame is being displayed on a screen.

There are at least two markers required and the markers shall be different for a left eye frame and different for a right eye frame. Therefore the markers are such that it is to be distinguished whether a right or left frame is displayed. This is required to match a frame with an eye.

Moreover, sometimes refresh rate may not be even. In case of odd number of frames, lack of information, in each frame, defining a target eye, would desynchronize the system.

There's also possible to implement a system where on average there will be the same number of frames for the left and the right eye. However, temporarily there may be more frames for either of the eyes. Hence a temporary asymmetry will be present. Systems based on an assumption the after each left-eye frame there must be a right-eye frame will not operate properly. In such a case the present system will stay immune to such changes and a change in order of displaying or displaying more than one frame for the same eye will not cause erroneous shutters management.

The markers may take various shapes, sizes and properties such as brightness and colour. The markers will need to be suitable for applied sensors. For example a left eye frame marker may be white while a right eye frame marker may be black. In another embodiment the markers may be configured such that their refresh time, when changing from a starting marker to an ending marker and when changing from an ending marker to a starting marker, is equal or close to equal. This of course depends heavily on a particular type of sensors used.

Markers identifying a frame need not be exactly the same. However in a preferred embodiment left eye frame markers are both white and right eye frame markers are both black.

The markers can be either embedded in a source video signal or added on an on-screen display layer for example added by a set-top box, receiving the video signal. The OSD layer shall be synchronized with the video signal. The use of OSD allows for setup of markers/sensors placement.

The sensors shall be placed along the axis 107 that is a refresh axis for a particular display screen used. Some display screens may refresh frames vertically while other may refresh frames horizontally. The present invention is suitable for both types of screen refreshing. In a horizontal refresh system every requirement previously applied to lines in a vertical refresh system will apply to columns accordingly.

In case of horizontal refreshing, naturally the sensors are to be placed such that they cover a horizontal span of a displayed frame. This is in line with the axis criterion defined above.

One of the sensors shall be treated as a frame starting sensor, while the other as a frame ending sensor.

Fig. 1B presents a display screen 104 with two sensors mounted on it. The sensors 106 and 105 are mounted in the top-right and bottom-left corner of the screen. It is to be noted that it is not essential that the sensors are placed in the corners.

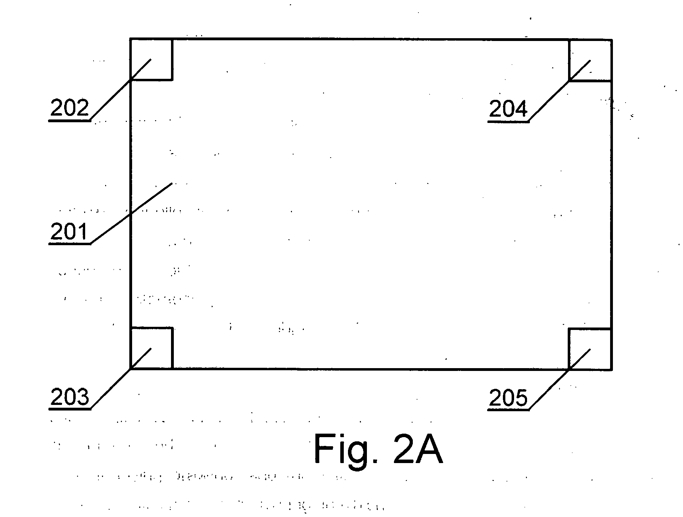

Fig. 2 presents a display screen 201 with four sensors 202 - 205 mounted on it. In case of two markers a user of the system must be aware of the axis that is a refresh axis for a particular display screen used. When four markers and sensors are used the system may adapt to the signal received while the user is not required to perform any configuring actions. The system will detect the axis that is a refresh axis for a particular display screen used and will configure the process of controlling shutter glasses accordingly. The configuring process may be automatically performed with the use of the OSD. For example all markers may be displayed one by one. The pairs of markers may be displayed in order to detect refresh axis. Therefore four markers allow for automatic configuration of the system.

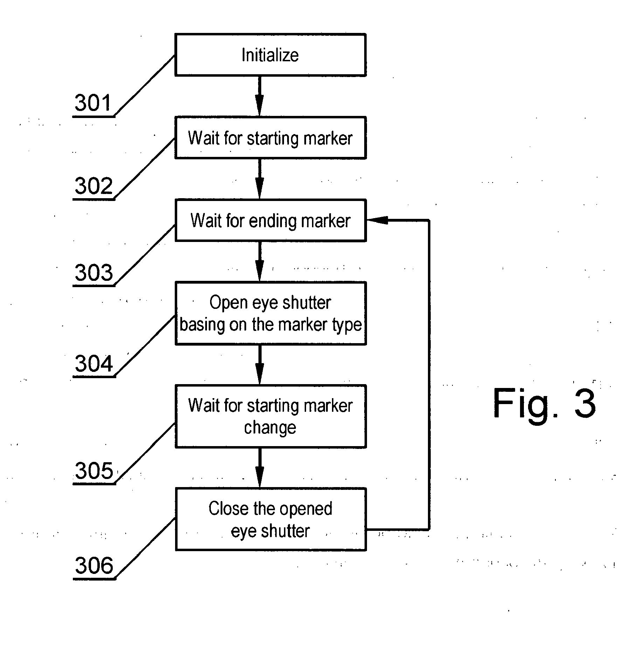

Fig. 3 shows a procedure for controlling shutters. The procedure starts at step 301 where the system is initialised. All pre-displaying tasks, such as resetting the sensors, are executed here. The next step, 302 is to wait until the frame starting sensor detects a frame starting marker for either left or right eye. When a starting marker has been detected, the shutters are closed and the system awaits, in step 303, the ending marker for the same eye.

When both markers have been detected for the same eye, in step 304, one of the shutters is opened based on the marker indicating either the left or right eye.

The next step 305 is to wait for the next starting marker. When the next starting marker is detected, indicating the other eye, the shutter previously opened is closed 306.

The procedure returns to step 303 and continues in a loop until a terminating event such as end of the video content.

In another embodiment there is proposed a method for controlling shutter glasses where the method allows for achieving a three-dimentional picture. Accordingly electric impulses are generated. Further these electric impulses cause displaying of at least two markers embedded in each frame where the first of the at least two markers is positioned in a first half of the frame and the second of the at least two markers is placed in a second half of the frame. The frame is split into the first and second halves along a line that is perpendicular to an axis, which is a refresh axis of a screen. Moreover the markers allow for distinguishing whether the displayed frame is assigned to the right of left eye. These markers are read by one or more sensors. After that, based on the signal from the one or more sensors, a signal is generated that drives the shutters in order to achieve the three-dimensional effect.

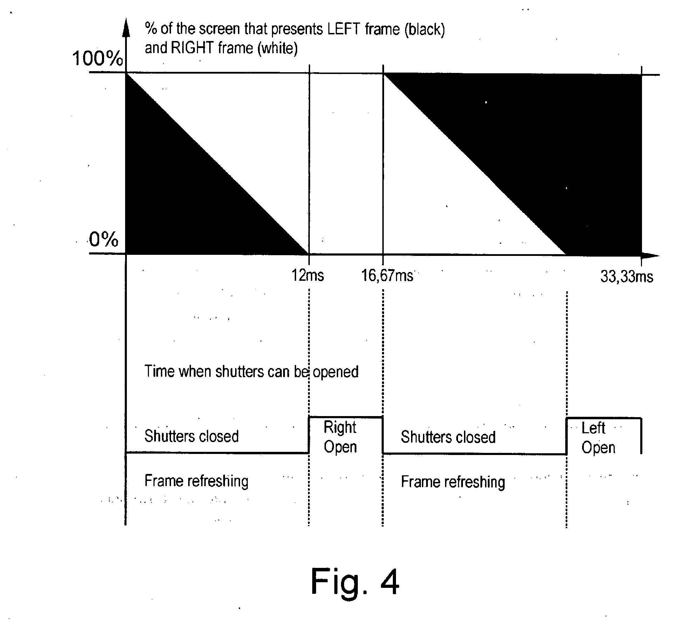

Fig. 4 depicts a waveform of shutters enabling signal. When one considers a process of displaying a video frame it may be wrongly assumed that between two V synchronization pulses a video signal frame is presented always in its entirety.

Typical displays present parts of previous frame to a moment when a whole new frame will be written to the screen matrix, for example an LCD matrix. A typical average time for modern LCD displays is at about 12 ms. In case of a 60Hz refresh rate it means that a time for refreshing and displaying a frame is about 16,67 ms.

It in turn means that only for about 4,67 ms of time the full new frame is presented. During the average 12 ms there are visible sections of both frames: the previous and the current. Therefore a shutter for a single eye can be opened for only 4,67 ms in such conditions.

Such a case has been depicted in Fig. 4. The frames are refreshed line by line and at a 60Hz refresh rate, on this display there is about 4,67ms of time when a shutter is open. It is to be noted that the refresh time of 12ms is an average and it may change for different frames. Hence, the time when shutters are opened may vary.

By employing a display that will refresh frames faster, subjective sharpness and brightness will be increased. The same effect will be obtained by lowering the refresh rate on the same display. Both of the aforementioned increase the length of a signal enabling the opening of shutters.

The present invention will operate properly at any refresh rate, however for a good quality 50 or more Hz refresh rate is recommended. At 50Hz each eye will receive 25 frames per second, which is enough in television environment to avoid flickering. Presently the following signals are suitable for this purpose 720 pixels at 60Hz, 720 pixels at 50Hz, 1080 pixels at 60Hz and 1080 pixels at 50Hz.

Additionally if a 100Hz or more display is used, for example a modern 200Hz television set, it is necessary to switch frame interpolation off. In such a case a single frame will be displayed more than once, which will have no effect on the sensors since markers will remain the same and a given shutter will be opened longer.

Modern, high refresh-rate television displays utilize analysis of two consecutive frames and detection of where a movement is present and based on that analysis a television set internally creates new interpolated frames to be placed between the actually received frames. In case of a typical, two dimensional content, such interpolation has no negative impact on the quality. However, in case of a stereoscopic video, two consecutive frames are different because of different points of view and not movement. A television set will not be aware of the fact and will try reducing detected "movement" by creating new interpolated frames placed between received frames. It will destroy or disturb stereo-vision effect.

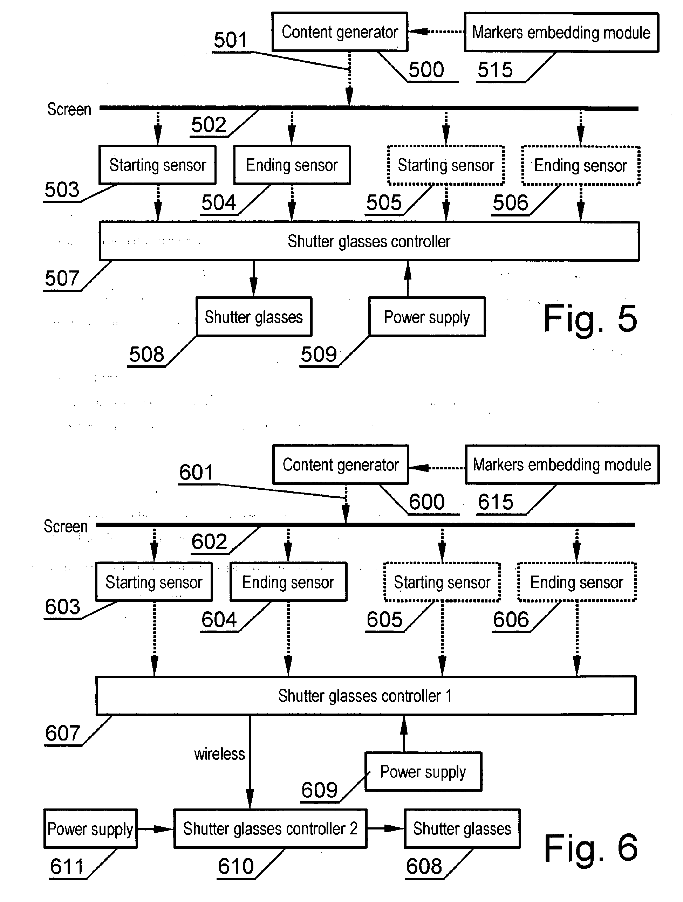

Fig. 5 presents a system for controlling shutter glasses. A content generator 500 prepares a signal 501 comprising content including at least two markers, being at least one starting marker and at least one ending marker. The markers are embedded in the signal 501 by a markers embedding module 515 coupled to the content generator 500.

In one embodiment the signal is a video data signal that is a typical signal comprising a video content of stereoscopic images. The video data signal further has at least two markers embedded in each frame of the stereoscopic video content, wherein one of the at least two markers is positioned in a first half of each video frame and a second of the at least two markers is positioned in a second half of each video frame, the frame being split into the first and the second halves along a splitting line being perpendicular to an axis that is a refresh axis 107 of a screen 502. The markers are such that to enable distinguishing between a right-eye and a left-eye frame.

In another embodiment the signal includes markers suitable for controlling opening and closing of shutter glasses, wherein one of the shutters is assigned to right eye and a second shutter is assigned to left eye. The markers are synchronized with frames assigned to the left and right eye respectively and displayed on a screen in order to achieve a three-dimensional picture. The signal comprises electric impulses caused by at least two markers embedded in each frame where the first of the at least two markers is positioned in a first half of the frame and the second of the at least two markers is placed in a second half of the frame. The frame is split into the first and second halves along a line that is perpendicular to an axis, which is a refresh axis of a screen. Moreover the markers allow for distinguishing whether the displayed frame is assigned to the right of left eye.

The signal is transmitted to a display screen 502. The screen 502 has corresponding sensors 503 - 506 to match the markers. Additional sensors 505 - 506 to the starting sensor 503 and the ending sensor 504 are optional.

In an exemplary embodiment the sensors may be phototransistor sensors, outputting signals to a shutter glasses controller 507. In other embodiments the sensors may be photodiodes, photoresistors or a suitable camera integrated with an image processor. Such sensors are commonly called as photosensors or photodetectors capable of responding to sensing light or other electromagnetic energy.

In further aspects of this embodiment, comparators are linked to the sensors, where the comparators compare current sensor signal with an average value obtained from a low pass filter. The comparators output a signal value of 1 when a first kind of marker is found and outputs 0 when a second kind of marker is found. A kind of marker is read according to the previous definition that the markers are such that it is to be distinguished whether a right or left frame is displayed.

A pair of signals, from the starting sensor comparator and the ending sensor comparator, are then output to an exclusive or gate in order to verify whether they are the same.

If the signals are the same a shutter, depending on the value of the signal, is to be opened and when the signals are different it means that a frame is being refreshed and shutters should be closed.

Appropriate shutter glasses enabling signal is transmitted from the shutter glasses controller 507 to the shutter glasses 508.

In order to operate the shutter glasses controller is supplied with power from a power source 509.

Fig. 6 presents a second embodiment of a system for controlling shutter glasses 608. A content generator 600 prepares a signal 601 comprising content including at least two markers, being at least one starting marker and at least one ending marker. The markers are embedded in the signal 601 by a markers embedding module 615 coupled to the content generator 600. The system differs from the system depicted in Fig. 5 in that a second shutter glasses controller 610, supplied with power by a power supply 611, is added in order to allow for a wireless transmission from the first shutter glasses controller 607 supplied with power by a power supply 609 whereas the screen 602 with sensors 603 - 606 remains the same.

In yet another embodiment, sensors may transmit data wirelessly directly to the second shutter glasses controller embedded in the shutter glasses. However in order to operate with any shutter glasses the shutter glasses controller should be a separate component.

It can be easily recognised, by one skilled in the art, that the aforementioned systems and methods for content recommendation may be performed and/or controlled by one or more computer programs comprising program code means.

Such computer programs are typically executed by utilizing the computing resources in a computing device such as personal computers, personal digital assistants, cellular telephones, receivers and decoders of digital television or the like. Applications are stored in or on a computer readable medium for example a non-volatile memory, such as a flash memory, hard-disk drive or volatile memory, for example RAM and are executed by a processor. These memories are exemplary recording media for storing computer programs comprising computer-executable instructions performing all the steps of the computer-implemented method according the technical concept presented herein.

The technique of the present invention may be implemented using any display, for example on a mobile phone, PDA's, portable computer or a desktop PC.

It can be easily recognised that there is a technical relationship among presented inventions of a video data signal, a method, a system, a computer program and a computer program readable medium since all involve one or more of the same or corresponding special technical features.

While the technical concept presented herein has been depicted, described, and has been defined with reference to particular preferred embodiments, such references and examples of implementation in the foregoing specification do not imply any limitation on the concept. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A video data signal comprising a video content comprising stereoscopic images and at least two markers embedded in each frame of the video content wherein wherein the markers are such that in each left-eye frame the at least two markers have a first graphical property and in each right-eye frame the at least two markers have a second graphical property, the first graphical property and the second graphical property being different such that the at least two markers enable distinguishing between the right-eye and the left-eye frame
**characterised in that**:
one of the at least two markers is positioned in lines of each frame refreshed first and positioned in the first 10% of each frame, along a refresh axis (107) of a display screen on which frames will be displayed, and the second, of the at least two markers, is positioned in the lines of each frame refreshed last and positioned in the last 10% of each frame, along the refresh axis (107) of a display screen on which frames will be displayed, and
wherein when it is detected by one or more photo sensing elements that a display displays the at least two markers having the same graphical property a signal is to be generated that will result in opening of one of shutters of the shutter glasses, depending on the detection of either said first graphical property or said second graphical property, while keeping closed the other shutter of the shutter glasses cooperating with the display, and when it is detected by one or more photo sensing elements that a display displays (305) the first marker, having a different graphical property than the second marker, a signal is to be generated that will result in closing both shutters of the shutter glasses cooperating with the display.

2. The video data signal according to claim 1 **characterised in that** said first graphical property and said second graphical property are both selected from the group comprising shape, size, brightness and colour.

3. A computer-implemented method for controlling shutter glasses comprising steps of
• receiving a stereoscopic video data signal,
• displaying the stereoscopic video data signal on a display screen (101),
• reading at least two markers, embedded in each frame of the stereoscopic video data signal, by one or more photosensors when the markers are displayed and
• generating, based on the signal read from the one or more photosensors, an enabling signal for the shutter glasses
the method being **characterised in that**
• the stereoscopic video data signal is a signal according to claim 1 and that the method further comprises the steps of
• controlling the shutter glasses based on the enabling signal such that when it is detected, by the one or more photosensors, that the display screen displays (305) the first marker, having a different graphical property than the second marker, there is effected closing of both shutters of the shutter glasses cooperating with the display (306) and when both first and second markers have been detected the first marker, having the same graphical property as the second marker (302, 303), one of the shutters of the shutter glasses is opened, based on the markers (304), while keeping the other shutter closed.

4. The method according to claim 3 **characterised in that** the markers are added on an on-screen display layer of the video content.

5. The method according to claim 3 **characterised in that** during a frame refreshing time the shutter glasses remain closed.

6. The method according to claim 5 **characterised in that** the frame refreshing time is a time when a left-eye frame first marker and a right-eye second marker are displayed or when a right-eye frame first marker and a left-eye ending second are displayed.

7. The method according to claim 3 **characterised in that** the photosensors comprise one or more photo sensing elements.

8. A computer program comprising program code means for performing all the steps of the method as claimed in any of claims 3 to 7 when said program is run on a computer.

9. A computer readable medium having computer-executable instructions performing all the steps of the computer-implemented method according to any of claims 3 to 7.

10. A system for controlling shutter glasses (508), the system comprising:
• a display screen (101);
• shutter glasses (508); and
• a shutter glasses controller (507) for controlling the shutter glasses (508);
• a source of stereoscopic video data signal (501) coupled to the display screen (101); and
• one or more photosensors configured to detect at least two markers, embedded in each frame of the stereoscopic video data signal, when a frame of the video data signal is displayed on the screen (101);
the system being **characterised in that**
• the stereoscopic video data signal (501) is a signal according to claim 1 and **in that**
• the shutter glasses controller (507) is configured to generate, based on the signal read from the one or more photosensors, an enabling signal for the shutter glasses (508) and further configured to control the shutter glasses (508) based on the enabling signal,
• wherein the opening of the corresponding shutter, while keeping the other shutter closed, is effected, based on the markers (304), at a time when both first and second markers have been detected, by the one or more photosensors, the first marker, having the same graphical property as the second marker (302, 303); and
• wherein the closing of both shutters is effected at a time when it is detected, by the one or more photosensors, that the first marker has a different graphical property than the second marker.

## Patentansprüche

1. Videodatensignal, umfassend Video-Inhalt, umfassend stereoskopische Bilder und wenigstens zwei Markierungen, die in jedes Einzelbild des Video-Inhalts eingebettet sind, wobei die Markierungen so sind, dass in jedem linkes-Auge-Einzelbild die wenigstens zwei Markierungen eine erste grafische Eigenschaft aufweisen, und in jedem rechtes-Auge-Einzelbild die wenigstens zwei Markierungen eine zweite grafische Eigenschaft aufweisen, wobei die erste grafische Eigenschaft und die zweite grafische Eigenschaft verschieden sind, so dass die wenigstens zwei Markierungen es ermöglichen, zwischen dem rechtes-Auge-Einzelbild und dem linkes-Auge-Einzelbild zu unterscheiden,
**dadurch gekennzeichnet, dass** eine der wenigstens zwei Markierungen in Zeilen von jedem Einzelbild positioniert ist, die zuerst aktualisiert werden und in den ersten 10% von jedem Einzelbild entlang einer Aktualisierungsachse (107) eines Anzeige-Schirms positioniert sind, auf dem Einzelbilder angezeigt werden, und die zweite der wenigstens zwei Markierungen in den Zeilen von jedem Einzelbild positioniert ist, die als letztes aktualisiert werden und in den letzten 10% von jedem Einzelbild entlang der Aktualisierungsachse (107) eines Anzeige-Schirms positioniert sind, auf dem Einzelbilder angezeigt werden, und
wobei dann, wenn durch ein oder mehr Photo-Sensor-Elemente erfasst wird, dass eine Anzeige die wenigstens zwei Markierungen anzeigt, die die gleiche grafische Eigenschaft aufweisen, ein Signal zu erzeugen ist, das dazu führen wird, dass einer von Shuttern der Shutter-Brille geöffnet werden wird, abhängig von der Erfassung von entweder der ersten grafischen Eigenschaft oder der zweiten grafischen Eigenschaft, während der andere Shutter der Shutter-Brille geschlossen gehalten wird, die mit der Anzeige zusammenwirkt, und wenn durch ein oder mehr Photo-Sensor-Elemente erfasst wird, dass eine Anzeige die erste Markierung anzeigt (305), die eine andere grafische Eigenschaft aufweist als die zweite Markierung, ein Signal zu erzeugen ist, das dazu führen wird, dass beide Shutter der Shutter-Brille geschlossen werden, die mit der Anzeige zusammenwirkt.

2. Das Videodatensignal nach Anspruch 1, **dadurch gekennzeichnet, dass** die erste grafische Eigenschaft und die zweite grafische Eigenschaft beide aus der Gruppe ausgewählt sind, die Form, Größe, Helligkeit und Farbe umfasst.

3. Computer-implementiertes Verfahren zum Steuern/Regeln einer Shutter-Brille, umfassend Schritte:
• Empfangen eines stereoskopischen Videodatensignals,
• Anzeigen des stereoskopischen Videodatensignals auf einem Anzeige-Schirm (101),
• Lesen von wenigstens zwei Markierungen, die in jedes Einzelbild von dem stereoskopischen Videodatensignal eingebettet sind, durch einen oder mehr Photo-Sensoren, wenn die Markierungen angezeigt werden, und
• Erzeugen eines Freigabe-Signals für die Shutter-Brille auf Basis von dem Signal, das von dem einen oder mehr Photo-Sensoren gelesen wird,
wobei das Verfahren **dadurch gekennzeichnet ist, dass**
• das stereoskopische Videodatensignal ein Signal gemäß Anspruch 1 ist, und dass das Verfahren weiter die Schritte umfasst:
• Steuern/Regeln der Shutter-Brille auf Basis des Freigabe-Signals, so dass dann, wenn durch den einen oder mehr Photo-Sensoren erfasst wird, dass der Anzeige-Schirm die erste Markierung anzeigt (305), die eine von der zweiten Markierung unterschiedliche grafische Eigenschaft aufweist, ein Schließen von beiden Shuttern der Shutter-Brille durchgeführt wird, die mit der Anzeige (306) zusammenwirkt, und wenn sowohl die erste als auch die zweite Markierung erfasst worden sind, wobei die erste Markierung die gleiche grafische Eigenschaft aufweist wie die zweite Markierung (302, 303), einer der Shutter der Shutter-Brille auf Basis der Markierungen (304) geöffnet wird, während der andere Shutter geschlossen gehalten wird.

4. Verfahren nach Anspruch 3, **dadurch gekennzeichnet, dass** die Markierungen einem Bildschirm-Anzeige-Layer von dem Video-Inhalt hinzugefügt werden.

5. Verfahren nach Anspruch 3, **dadurch gekennzeichnet, dass** während einer Einzelbild-Aktualisierungszeit die Shutter-Brille geschlossen bleibt.

6. Verfahren nach Anspruch 5, **dadurch gekennzeichnet, dass** die Einzelbild-Aktualisierungszeit eine Zeit ist, wenn eine erste Markierung eines linkes-Auge-Einzelbilds und eine zweite Markierung eines rechten Auges angezeigt werden, oder wenn eine erste Markierung eines rechtes-Auge-Einzelbilds und ein linkes-Auge-zweites-Ende angezeigt werden.

7. Verfahren nach Anspruch 3, **dadurch gekennzeichnet, dass** die Photo-Sensoren ein oder mehr Photo-Sensor-Elemente umfassen.

8. Computerprogramm, umfassend Programmcode-Mittel, zur Durchführung aller Schritte des Verfahrens nach einem der Ansprüche 3 bis 7, wenn das Programm auf einem Computer läuft.

9. Computer-lesbares Medium mit von einem Computer durchführbaren Anweisungen, welche alle die Schritte des Computer-implementierten Verfahrens nach einem der Ansprüche 3 bis 7 durchführen.

10. System zum Steuern/Regeln einer Shutter-Brille (508), wobei das System umfasst:
• einen Anzeige-Schirm (101),
• eine Shutter-Brille (508), und
• eine Shutter-Brille-Steuer-/Regeleinrichtung (507) zum Steuern/Regeln der Shutter-Brille (508)
• eine Quelle eines stereoskopischen Videodatensignals (501), die mit dem Anzeige-Schirm (101) gekoppelt ist, und
• einen oder mehr Photo-Sensoren, die dazu konfiguriert sind, wenigstens zwei Markierungen zu erfassen, die in jedem Einzelbild des stereoskopischen Videodatensignals eingebettet sind, wenn ein Einzelbild des Videodatensignals auf dem Schirm (101) angezeigt wird,
wobei das System **dadurch gekennzeichnet ist, dass**
• das stereoskopische Videodatensignal (501) ein Signal nach Anspruch 1 ist, und dass
• die Shutter-Brille-Steuer-/Regeleinrichtung (507) dazu konfiguriert ist, auf Basis des Signals, das von dem einen oder mehr Photo-Sensoren gelesen wird, ein Freigabe-Signal für die Shutter-Brille (508) zu erzeugen, und weiter dazu konfiguriert ist, die Shutter-Brille (508) auf Basis von dem Freigabe-Signal zu steuern/regeln,
• wobei das Öffnen des entsprechenden Shutters, während der andere Shutter geschlossen bleibt, auf Basis der Markierungen (304), zu einer Zeit durchgeführt wird, wenn sowohl die erste als auch die zweite Markierung durch den einen oder mehr Photo-Sensoren erfasst worden sind, wobei die erste Markierung die gleiche grafische Eigenschaft aufweist wie die zweite Markierung (302, 303), und
• wobei das Schließen von beiden Shuttern zu einer Zeit durchgeführt wird, wenn durch den einen oder mehr Photo-Sensoren erfasst wird, dass die erste Markierung eine von der der zweiten Markierung verschiedene grafische Eigenschaft aufweist.

## Revendications

1. Signal de données vidéo comprenant un contenu vidéo comprenant des trames stéréoscopiques et au moins deux repères incorporés dans chaque trame du contenu vidéo dans lequel les repères sont tels que, dans chaque trame d'oeil gauche, les au moins deux repères possèdent une première propriété graphique et dans chaque trame d'oeil droit les au moins deux repères possèdent une seconde propriété graphique, la première propriété graphique et la seconde propriété graphique étant différentes de sorte que les au moins deux repères permettent de distinguer entre la trame d'oeil droit et la trame d'oeil gauche, **caractérisé en ce que** :
un des au moins deux repères est positionné dans des lignes de chaque trame rafraîchie en premier et positionné dans les premiers 10 % de chaque trame, le long d'un axe de rafraîchissement (107) d'un écran d'affichage sur lequel des trames seront affichées, et le second, des au moins deux repères, est positionné dans les lignes de chaque trame rafraîchie en dernier et positionné dans les derniers 10 % de chaque trame, le long de l'axe de rafraîchissement (107) d'un écran d'affichage sur lequel des trames seront affichées, et
dans lequel, lorsqu'il est détecté, par un ou plusieurs éléments de photo-détection, qu'un affichage affiche les au moins deux repères possédant la même propriété graphique, un signal doit être généré, qui entraînera l'ouverture d'un des obturateurs des verres d'obturateur, en fonction de la détection de ladite première propriété graphique ou de ladite seconde propriété graphique, tout en maintenant fermé l'autre obturateur des verres d'obturateur coopérant avec l'affichage, et lorsqu'il est détecté, par un ou plusieurs éléments de photo-détection, qu'un affichage affiche (305) le premier repère, possédant une propriété graphique différente de celle du second repère, un signal doit être généré qui entraînera la fermeture des deux obturateurs des verres d'obturateur coopérant avec l'affichage.

2. Signal de données vidéo selon la revendication 1, **caractérisé en ce que** ladite première propriété graphique et ladite seconde propriété graphique sont toutes les deux sélectionnées parmi le groupe comprenant la forme, la taille, la luminosité et la couleur.

3. Procédé implémenté par ordinateur pour commander des verres d'obturateur, comprenant les étapes de :
- la réception d'un signal de données vidéo stéréoscopiques,
- l'affichage du signal de données vidéo stéréoscopiques sur un écran d'affichage (101),
- la lecture d'au moins deux repères, incorporés dans chaque trame du signal de données vidéo stéréoscopiques, par un ou plusieurs photo-capteurs, lorsque les repères sont affichés, et
- la génération, en fonction du signal lu à partir du ou des photo-capteurs, d'un signal d'activation pour les verres d'obturateur,
le procédé étant **caractérisé en ce que**
- le signal de données vidéo stéréoscopiques est un signal selon la revendication 1 et que le procédé comprend en outre les étapes de
- la commande des verres d'obturateur en fonction du signal d'activation de sorte que, lorsqu'il est détecté, par le ou les photo-capteurs, que l'écran d'affichage affiche (305) le premier repère, possédant une propriété graphique différente de celle du second repère, la fermeture des deux obturateurs des verres d'obturateur coopérant avec l'affichage (306) soit effectuée et, lorsque les premier et second repères ont tous les deux été détectés, le premier repère possédant la même propriété graphique que celle du second repère (302, 303), un des obturateurs des verres d'obturateur soit ouvert, en fonction des repères (304), tout en maintenant l'autre obturateur fermé.

4. Procédé selon la revendication 3, **caractérisé en ce que** les repères sont ajoutés sur une couche d'affichage à l'écran du contenu vidéo.

5. Procédé selon la revendication 3, **caractérisé en ce que**, durant un temps de rafraîchissement de trame, les verres d'obturateur restent fermés.

6. Procédé selon la revendication 5, **caractérisé en ce que** le temps de rafraîchissement de trame est un temps durant lequel un premier repère de trame d'oeil gauche et un second repère d'oeil droit sont affichés ou durant lequel un premier repère de trame d'oeil droit et un second de fin d'oeil gauche sont affichés.

7. Procédé selon la revendication 3, **caractérisé en ce que** les photo-capteurs comprennent un ou plusieurs éléments de photo-détection.

8. Programme d'ordinateur comprenant des moyens codes de programme pour réaliser toutes les étapes du procédé selon une quelconque des revendications 3 à 7 lorsque ledit programme est exécuté sur un ordinateur.

9. Support lisible par ordinateur possédant des instructions exécutables par ordinateur réalisant toutes les étapes du procédé implémenté par ordinateur selon une quelconque des revendications 3 à 7.

10. Système pour commander des verres d'obturateur (508), le système comprenant :
- un écran d'affichage (101) ;
- des verres d'obturateur (508) ; et
- un dispositif de commande de verres d'obturateur (507) pour commander les verres d'obturateur (508) ;
- une source de signal de données vidéo stéréoscopiques (501) couplée à l'écran d'affichage (101) ; et
- un ou plusieurs photo-capteurs configurés pour détecter au moins deux repères, incorporés dans chaque trame du signal de données vidéo stéréoscopiques, lorsqu'une trame du signal de données vidéo est affichée sur l'écran (101) ;
le système étant **caractérisé en ce que**
- le signal de données vidéo stéréoscopiques (501) est un signal selon la revendication 1 et **en ce que**
- le dispositif de commande de verres d'obturateur (507) est configuré pour générer, en fonction du signal lu à partir du ou des photo-capteurs, un signal d'activation pour les verres d'obturateur (508) et configuré en outre pour commander les verres d'obturateur (508) en fonction du signal d'activation,
- dans lequel l'ouverture de l'obturateur correspondant, tout en maintenant l'autre obturateur fermé, est effectuée, en fonction des repères (304), à un instant auquel les premier et second repères ont tous les deux été détectés, par le ou les photo-capteurs, le premier repère possédant la même propriété graphique que le second repère (302, 303) ; et
- dans lequel la fermeture5des deux obturateurs est effectuée à un instant auquel il est détecté, par le ou les photo-capteurs, que le premier repère possède une propriété graphique différente de celle du second repère.
